# EUROPEAN PATENT APPLICATION

(11) **EP 4 354 473 A1**
(43) Date of publication of application: **17.04.2024**
(21) Application number: 23203672.3
(22) Date of filing: 13.10.2023
(51) Int. Cl.: H01F 3/14, H01F 27/28, H01F 30/12

(54) **TRANSFORMER OF AN ELECTRICAL SYSTEM FOR DC VOLTAGE CONVERSION AND FOR CHARGING OF BATTERIES OF A VEHICLE**

(30) Priority: 14.10.2022 FR 2210624
(71) Applicant: Valeo eAutomotive France SAS, 95892 Cergy Pontoise (FR)
(72) Inventor: DA CUNHA ALVES, Wendell, 95892 CERGY PONTOISE (FR); RIBEIRO DE FARIA SANTOS, Kelly, 95892 CERGY PONTOISE (FR)
(74) Representative: Valeo Powertrain Systems

(57) **Abstract**

The invention concerns a transformer (20) comprising a magnetic core (5), the magnetic core (5) comprising plural limbs (51, 52, 53) around each of which is wound a primary winding (P1, P2, P3), a first secondary winding (S1, S2, S3) and a tertiary winding (T1a-T1b, T2a-T2b, T3aT3b or T1, T2, T3); the transformer (20) comprising said windings; the magnetic core (5) comprising a first half core (5a) and a second half core (5b) respectively comprising sub-limbs (51a, 52a, 53a, 51b, 52b, 53b) of the limbs (51, 52, 53); the transformer (20) being characterized in that:
the air gaps (61) are respectively located either close to the first half core (5a), or close to the second half core (5b);
some of the windings of the transformer (20) are Litz wires, and some of the windings are flat conductors.

## Description

### TECHNICAL FIELD

The present invention relates to the field of electrical systems to be utilized in an electric vehicle (EV) or a hybrid electric vehicle (HEV).

The present invention relates in particular to a transformer of an electrical system which is configured to charge and discharge two batteries of the vehicle, wherein one of the batteries has a higher rated voltage than the other.

### BACKGROUND OF THE INVENTION

As is known, an electric vehicle or a hybrid automotive vehicle comprises an electric drive system, powered by a high-voltage (HV) power supply battery via an on-board high-voltage electrical network, and a plurality of auxiliary electrical equipment powered by a low-voltage (LV) power supply battery via an on-board low-voltage electrical network. Thus, the high-voltage battery ensures a power supply to the electric motorization system allowing the propulsion of the vehicle. The low-voltage battery powers the auxiliary electrical equipment, such as an on-board electronic control unit (ECU), a window lift motor, a multimedia system, etc. The high-voltage battery typically delivers a voltage between 100 V and 900 V, preferably between 400 V and 600 V, while the low-voltage battery typically delivers a voltage of around 12 V, 24 V or 48 V.

In general, an electrical system of an electric/hybrid vehicle comprises two power converters to act as an interface between different power sources and to charge the high-voltage and the low-voltage batteries. The two power converters comprise an on-board electric charger (OBC) and a DC-DC converter. The OBC is utilized to collect an alternative current (AC) voltage from an external power grid (e.g. a domestic AC grid) and to convert it to a high direct current (DC) voltage so as to charge the high-voltage battery. On the other hand, the DC-DC converter, also considered as an auxiliary power supply (APM), is configured to convert a high voltage from the high-voltage battery to a low voltage to supply low power accessories and the low-voltage battery of the vehicle.

In general, the OBC and the DC-DC converter of the electrical system are mounted into the vehicle as two completely independent devices, and has each an individual casing and an individual cooling system. Nevertheless, there is an increasing demand for a compact design for the electrical system, e.g. reducing the volume and the weight of the electrical system mounted in the vehicle, reducing the number of components of the electrical system. To this end, several solutions are then proposed in the recent market.

One of the solutions is to install the independent OBC and DC-DC converters inside a same casing, which allows them both to use a same cooling system and even same electromagnetic compatibility (EMC) filters. However, the volume and the weight of such an electrical system, and the number of components (e.g. semiconductors, magnetics, interconnections and printed circuit boards (PCB)) still need to be reduced.

Other known solutions may allow the electrical system to have less components. However, such electrical systems present important drawbacks such as ripples in the current to be supplied to the batteries, power dissipation, lack of galvanic isolation between certain components of the electrical system, lack of modularity in terms of structure design of the electrical system, etc.

In this context, a transformer design which allows one or plural transformer(s) of the electric system to collaborate with other components of the electric system in order to efficiently charge and discharge a high-voltage battery and a low-voltage battery of a vehicle while overcoming at least part of the above-mentioned drawbacks.

### SUMMARY OF THE INVENTION

The present invention relates to a transformer comprising a magnetic core, the magnetic core comprising plural limbs around each of which is wound a primary winding, a first secondary winding and a tertiary winding; the transformer comprising said windings; the magnetic core comprising a first half core and a second half core respectively comprising sub-limbs of the limbs; the transformer being characterized in that:

the air gaps are respectively located either close to the first half core, or close to the second half core;

some of the windings of the transformer are Litz wires, and some of the windings are flat conductors.

The primary windings and the secondary windings may be coupled in a way to form a first sub-transformer, the primary windings and tertiary windings may be coupled in a way to form a second sub-transformer, the secondary windings and tertiary windings may be coupled in a way to form a third sub-transformer;

According to an embodiment, the primary windings and the first secondary windings are Litz wires; and/or the tertiary windings of the transformer are flat conductors.

According to an embodiment, the Litz wires of the primary windings and the first secondary windings are made of series connections between multiples turns; and/or the tertiary windings of the transformer are respectively arranged by comprising parallel-connected turns.

According to an embodiment, the air gaps are all located close to the first half core; or the air gaps are all located close to the second half core; or the air gap in the middle limb is located close to the first half core while the air gap in the limb adjacent to the middle limb is located close to the second half core; or the air gap in the middle limb is located close to the second half core while the air gap in the limb adjacent to the middle limb is located close to the first half core.

According to an embodiment, for each of the limbs of the magnetic core, the corresponding first secondary winding is sandwiched between two sets of turns of the tertiary winding.

According to an embodiment, each of the tertiary windings of the transformer is interleaved with one of the primary windings, in a way that one set of turns of the tertiary winding is sandwiched between two sets of turns of the corresponding primary winding; and/or each of the tertiary windings is also respectively interleaved with one of the first secondary windings, in a way that one set of turns of the tertiary winding is sandwiched between two sets of turns of the corresponding first secondary winding.

According to an embodiment, the primary windings respectively wound around one of two adjacent limbs are arranged in a way that one of the primary windings is wound close to one of the first and the second half cores while the other primary winding is wound close to the other one of the first and the second half cores; and/or the first secondary windings respectively wound around one of two adjacent limbs are arranged in a way that one of the first secondary windings is wound close to one of the first and the second half cores while the other first secondary winding is wound close to the other one of the first and the second half cores.

According to an embodiment, each of the tertiary windings of the transformer is interleaved with one of the primary windings, in a way that at least one set of turns of the tertiary winding and one set of turns of the corresponding first secondary winding are sandwiched between two sets of turns of the corresponding primary winding; and/or each of the tertiary windings is also interleaved with one of the first secondary windings, in a way that at least one set of turns of the tertiary winding and one set of turns of the corresponding primary winding are sandwiched between two sets of turns of the corresponding first secondary winding.

According to an embodiment, the tertiary windings are respectively composed of two auxiliary windings, or are respectively a single winding.

In addition, the invention relates to an electrical system for an electric vehicle or a hybrid electric vehicle, comprising a transformer according to any one of the preceding claims.

According to an embodiment, the electrical system is connected to a power factor correction (PFC) converter and configured to charge and discharge a first battery and a second battery of the vehicle; the first battery having a higher rated voltage than the second battery; the electrical system comprising:
a LLC primary circuit comprising a first multi-phase H-bridge to control primary windings of the transformer; the LLC primary circuit being connected to the PFC converter;
a HVDC part coupled to the LLC primary circuit, first secondary windings of the transformer and the first battery, so as to allow energy exchange with the first battery; the HVDC part comprising a second multi-phase H-bridge configured to control the first secondary windings;
a LVDC part coupled to tertiary windings of the transformer and to the second battery so as to allow energy exchange with the second battery; the LVDC part comprising a rectifier configured to control the tertiary windings of the transformer.

The invention also concerns an electric vehicle or a hybrid electric vehicle comprising an electrical system as briefly described hereabove.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 illustrates an electrical system for AC/DC voltage conversion and for charging of batteries, according to an embodiment of the invention;
Figure 2 illustrates that a transformer of the electrical system illustrated in Figure 1 comprises resonant inductors and magnetizing inductors;
Figure 3 illustrates that a transformer of the electrical system illustrated in Figure 1 does neither comprise resonant inductors nor magnetizing inductors;
Figure 4 illustrates the electrical system according to an embodiment of the invention different from the embodiment depicted in Figure 1;
Figure 5 illustrates that a transformer of the electrical system illustrated in Figure 4 comprises resonant inductors and magnetizing inductors;
Figure 6 illustrates that a transformer of the electrical system illustrated in Figure 4 does neither comprise resonant inductors nor magnetizing inductors;
Figure 7 illustrates a first operation mode of the electrical system according to the invention;
Figure 8 illustrates a second operation mode of the electrical system according to the invention;
Figure 9 illustrates a third operation mode of the electrical system according to the invention;
Figure 10 illustrates a fourth operation mode of the electrical system according to the invention;
Figure 11 illustrates a fifth operation mode of the electrical system according to the invention;
Figure 12 illustrates a magnetic core of the transformer according to an embodiment of the invention;
Figure 13 illustrates, according to the invention, a first wiring option for wiring on the magnetic core the windings of the transformer, limbs of the magnetic core comprising an air gap;
Figure 14 illustrates, according to the invention, a second wiring option for wiring on the magnetic core the windings of the transformer, in which the air gap of the limbs has a different position than in Figure 13;
Figure 15 illustrates, according to the invention, a third wiring option for wiring on the magnetic core the windings of the transformer;
Figure 16 illustrates, according to the invention, a fourth wiring option for wiring on the magnetic core the windings of the transformer;
Figure 17 illustrates, according to the invention, a fifth wiring option for wiring on the magnetic core the windings of the transformer; and
Figure 18 illustrates another embodiment of the invention forming a triangular transformer.

### DETAILED DESCRIPTION

Several embodiments of the present invention will be detailed hereafter with reference to the drawings. It will be apparent to those skilled in the art from this present disclosure that the following description of these embodiments of the present invention are provided for illustration only and not for the purpose of limiting the invention as defined by the appended claims and their equivalents.

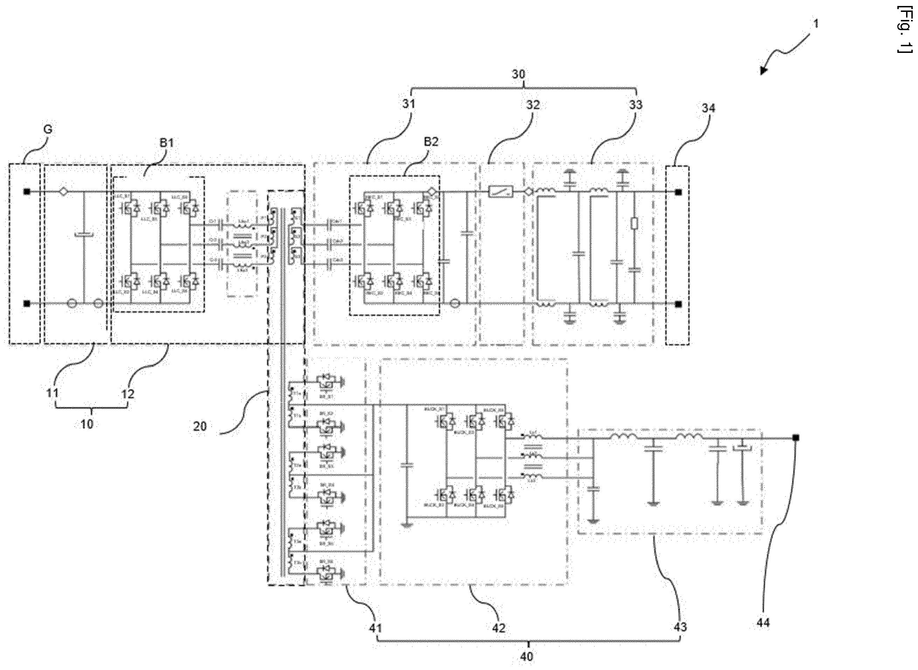

The invention concerns an electrical system 1 of an electric vehicle or a hybrid electric vehicle. The electrical system 1 is configured to charge and discharge two batteries 34, 44 of the vehicle. Figure 1 illustrates the electrical system 1 according to an embodiment of the invention.

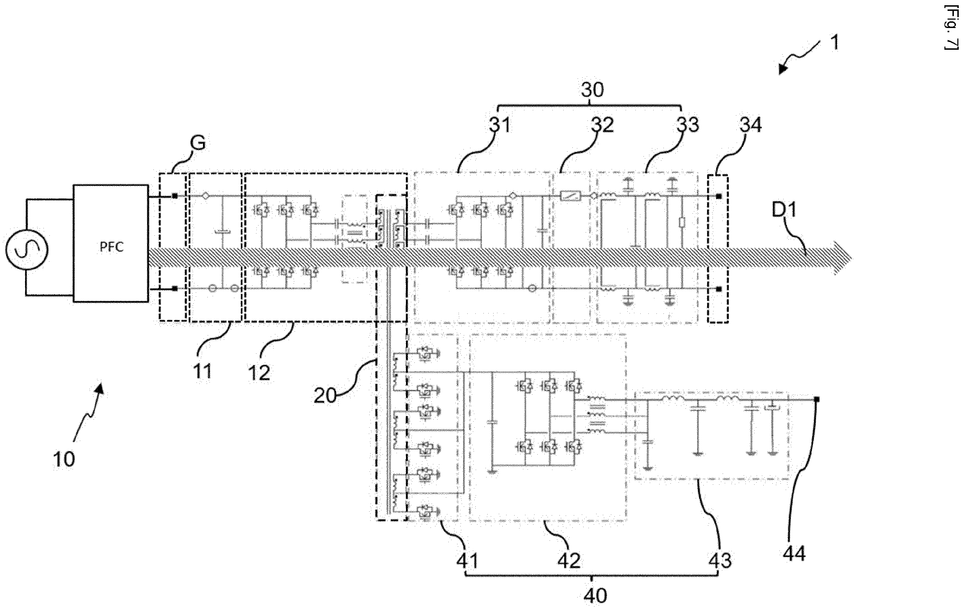

The electrical system 1 comprises a power factor correction (PFC) part 10, a transformer 20, a high voltage direct current (HVDC) part 30, and a low voltage direct current (LVDC) part 40. The electrical system 1 is connected to and powered by the PFC which delivers a voltage of 220 V for example. The PFC is an AC/DC converter. The electrical system 1 has five operation modes respectively illustrated in Figures 7 to 11 and in the concerned paragraphs.

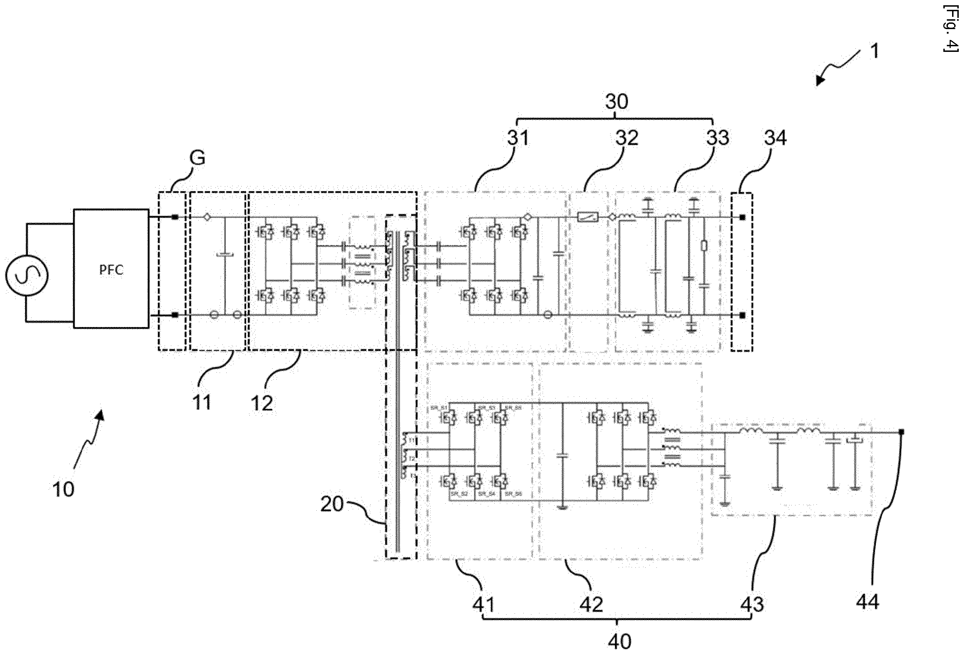

The transformer 20 is a multi-phase transformer. The term "multi-phase" in the text means a number "n" of phases, wherein n is a multiple of three or of two. For example, in the embodiments illustrated in the figures, n is equal to three (i.e. "three-phase"). The transformer 20 comprises a magnetic core 5 and windings wound on the magnetic core 5. More precisely, the windings of the transformer 20 comprise primary windings P1 to P3, first secondary windings S1 to S3, and tertiary windings T1a-T1b, T2a-T2b, T3a-T3b. Each of the tertiary windings is preferably composed of two auxiliary windings, and corresponds to one of the primary windings and to one of the first secondary windings. For example, in the embodiment illustrated in Figure 1, auxiliary windings T1a, T1b form the tertiary winding T1a-T1b which corresponds to the primary winding P1 and to the first secondary winding S1. Alternatively, as illustrated in Figure 4, the tertiary windings can respectively be a single winding T1, T2, T3, and are connected to three half-bridges (of a rectifier 41), which will be described in detail later in the description.

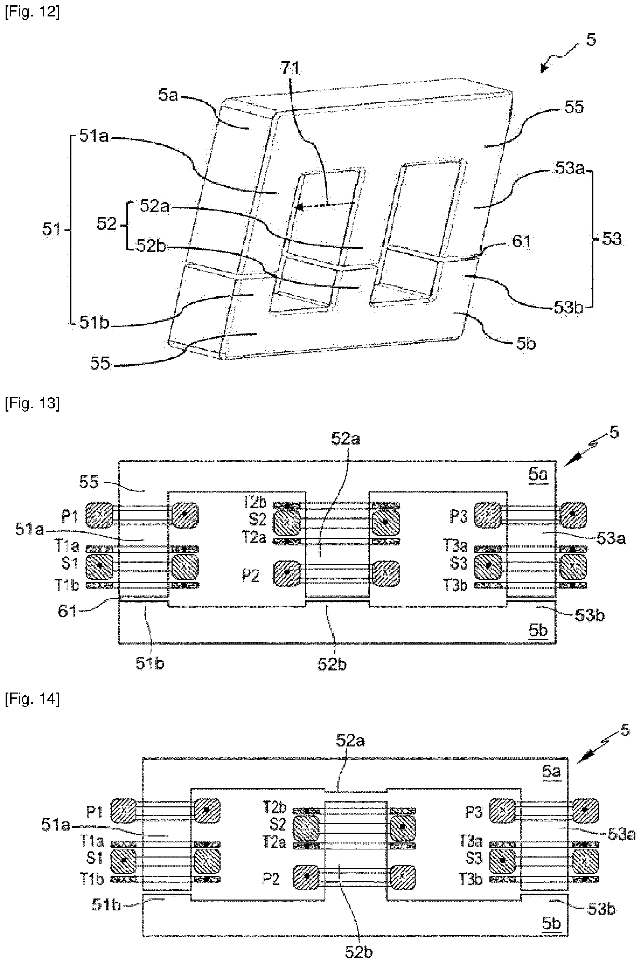

Moreover, each of the tertiary windings can be easily integrated with its corresponding primary winding and its corresponding first secondary winding, in particular by obtaining the tertiary winding with a turn around one of limbs of the magnetic core 5 coupling its corresponding primary winding and its corresponding first secondary winding. For example, in the embodiment illustrated in Figure 1 (or in Figure 4), the tertiary winding T1a-T1b (or T1) can be integrated with the primary winding P1 and the first secondary winding S1 on a first limb of the magnetic core. Similarly, the tertiary winding T2a-T2b (or T2) can be integrated with the primary winding P2 and the first secondary winding S2 on a second limb of the magnetic core, while the tertiary winding T3a-T3b (or T3) can be integrated with the primary winding P3 and the first secondary winding S3 on a third limb of the magnetic core. The wiring of the windings of the transformer 20 will be described in Figures 12 to 17 and the concerned paragraphs.

The PFC part 10 comprises two output terminals G which are respectively connected to a DC-Link capacitor 11 and a LLC primary circuit 12 which is connected to the DC-Link capacitor 11. The PFC is an AC-DC converter. The DC-Link capacitor 11 is connected between the output terminals G and a first multi-phase H-bridge B1. The LLC primary circuit 12 comprises the first multi-phase H-bridge B1 configured to control the primary windings P1 to P3 of the transformer 20. The first multi-phase H-bridge B1 comprises plural controlled switches LLC_S1 to LLC_S6 which are preferably metal oxide semiconductor field effect transistors (MOSFET). More precisely, the first multi-phase H-bridge B1 comprises three arms LLC_S1-LLC_S2, LLC_S3-LLC_S4, LLC_S5-LLC_S6 respectively composed of a pair of switches, as illustrated in Figure 1.

The electrical system 1 comprises a first resonant circuit coupled to the first multi-phase H-bridge B1. The first resonant circuit is a multi-phase resonant circuit, and comprises resonance capacitors Cr1 to Cr3, first resonant inductors Llkp1 to Llkp3 and first magnetizing inductors Lm1 to Lm3. According to an embodiment, the LLC primary circuit 12 comprises the resonance capacitors Cr1 to Cr3 and the first resonant inductors Llkp1 to Llkp3.

The resonance capacitors Cr1 to Cr3 are respectively connected between one of the first resonant inductors Llkp1 to Llkp3 and one of the arms of the first multi-phase H-bridge B1. The first resonant inductors Llkp1 to Llkp3 are respectively coupled to one of the primary windings P1 to P3 of the transformer 20. The resonance capacitors Cr1 to Cr3 and the first resonant inductors Llkp1 to Llkp3 are in series with the primary windings P1 to P3. The first magnetizing inductors Lm1 to Lm3, respectively corresponding to one of the primary windings P1 to P3, are respectively a component distinct from the primary windings P1 to P3, or alternatively, are respectively an intrinsic inductance of one of the primary windings P1 to P3.

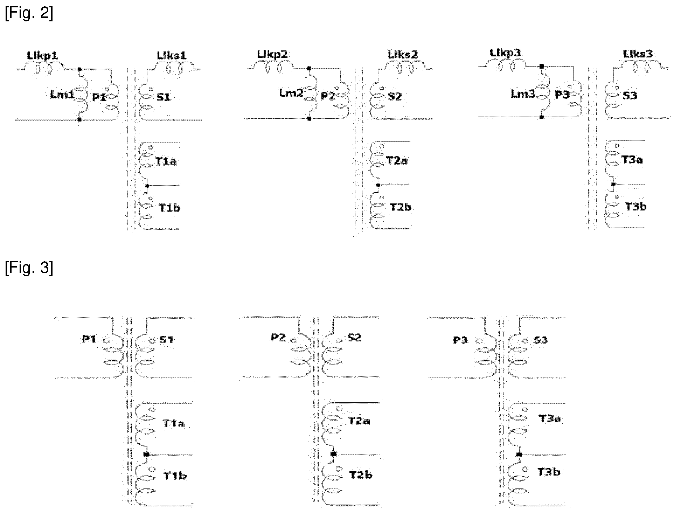

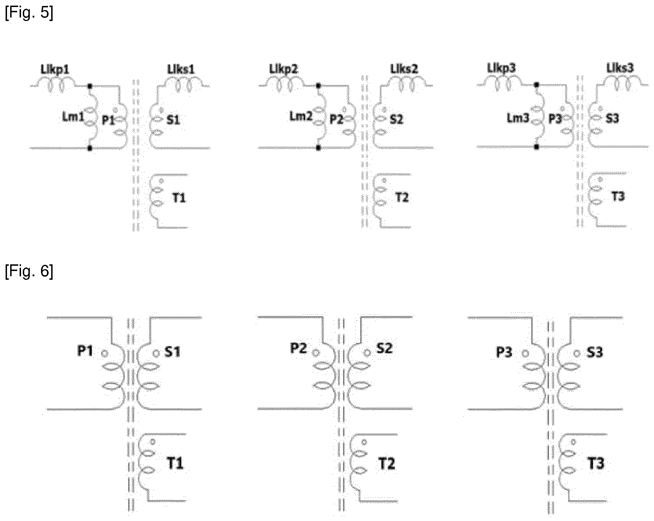

As illustrated in Figures 2 and 5, the first resonant inductors Llkp1 to Llkp3 and the first magnetizing inductors Lm1 to Lm3 are integrated into the transformer 20. Alternatively, as illustrated in Figures 3 and 6, the transformer 20 does neither comprise the first resonant inductors Llkp1 to Llkp3 nor the first magnetizing inductors Lm1 to Lm3.

The HVDC part 30 is coupled to the LLC primary circuit 12, the first secondary windings S1 to S3 and a first battery 34, so as to allow energy exchange with the first battery 34. The first battery 34 is a high-voltage (HV) battery, wherein "high voltage" means a voltage greater than 60V, or even 80V or 100 V, in particular between 100 V and 900 V. The first battery 34 is for example powered by a high voltage of around 400 V. The HVDC part 30 comprises an LLC secondary circuit 31. The LLC secondary circuit 31 comprises secondary capacitors Cs1 to Cs3 and a second multi-phase H-bridge B2. The secondary capacitors Cs1 to Cs3 are connected between the first secondary windings S1 to S3 and the second multi-phase H-bridge B2.

The LLC secondary circuit 31 is controlled by the second multi-phase H-bridge B2. The second multi-phase H-bridge B2 comprises plural controlled switches REC_S1 to REC_S6 which are preferably MOSFET transistors. More precisely, the second multi-phase H-bridge B2 comprises plural arms REC_S1-REC_S2, REC_S3-REC_S4 and REC_S5-REC_S6 respectively composed of a pair of switches, as illustrated in Figures 1 and 4. The secondary capacitors Cs1 to Cs3 are respectively in series with one of the first secondary winding S1 to S3 and with one of the arms of the second multi-phase H-bridge B2.

According to a preferable embodiment, compared to a capacity value of the resonance capacitor Cr1, Cr2 or Cr3, the secondary capacitors Cs1 to Cs3 comprises each a high capacity value, in particular at least ten times greater for instance. The capacity values of the secondary capacitors Cs1 to Cs3 are, for example, respectively of between 3 µF and 100 µF. This makes it possible to have a negligible impedance at switching frequencies of the electrical system 1. The function of the secondary capacitors Cs1 to Cs3 is to avoid saturation of the transformer in reverse operation, i.e. in a third and a fourth operation modes which will be described below.

In addition, the electrical system 1 may comprise a second resonant circuit comprising the secondary capacitors Cs1 to Cs3, second resonant inductors Llks1 to Llks3, and preferably second magnetizing inductors (not shown in the figures). The second resonant circuit is a multi-phase resonant circuit. The second resonant inductors Llks1 to Llks3 are respectively in series with one of the first secondary windings S1 to S3 of the transformer 20. The second magnetizing inductors respectively corresponds to one of the first secondary windings S1 to S3, and in particular, respectively corresponds to an intrinsic inductance of one of the first secondary windings S1 to S3. This second resonant circuit is utilized to discharge the first battery 34 for charging the PFC converter, i.e. in the third operation mode which will be described below.

According to an embodiment, the second resonant inductors Llks1 to Llks3 (and possibly the second magnetizing inductors) are integrated into the transformer 20, as illustrated in Figures 2 and 5. Alternatively, the transformer 20 does neither comprise the second resonant inductors Llks1 to Llks3 nor the second magnetizing inductors, as illustrated in Figures 3 and 6.

According to another embodiment, the transformer 20 does neither comprises the first resonant inductors Llkp1 to Llkp3 nor the second resonant inductors Llks1 to Llks3, but comprises the first magnetizing inductors Lm1 to Lm3.

According to the embodiment in which the circuit comprises the second resonant inductors Llks1 to Llks3, compared to the capacity value of the resonance capacitor Cr1, Cr2 or Cr3, the secondary capacitors Cs1 to Cs3 comprises each a value of the same order of magnitude.

Preferably, the HVDC part 30 further comprises a reverse switch 32 and an output EMC filter 33. The reverse switch 32 is connected between the LLC secondary circuit 31 and the output EMC filter 33, and is configured to protect the HVDC battery in case of malfunctioning of the OBC. The EMC filter 33 is connected between the output EMC filter 33 and the first battery 34.

As for the LVDC part 40, it is coupled to the tertiary windings of the transformer 20 and a second battery 44 so as to allow energy exchange with the second battery 44. The second battery 44 is a low-voltage (LV) battery, wherein "low voltage" means a voltage less than or equal to 60V, or even 48V, 24 V or 12V or even less, in particular between 8 V and 15.5 V. The LVDC part 40 comprises a rectifier 41 and a buck converter 42. The LVDC part 40 is connected to the rectifier 41 which is a preferably a center tapped rectifier.

The rectifier 41, being connected between the tertiary windings of the transformer 20 and the buck converter 42, comprises plural switches SR_S1 to SR_S6 which are preferably MOSFET transistors. The rectifier 41 at the LV side of the transformer 20 can be a full bridge rectifier or, alternatively, a half wave rectifier. According to the embodiment illustrated in Figure 1, the switches SR_S1 to SR_S6 form plural sets of switches respectively corresponding to one of the tertiary windings T1a-T1b, T2a-T2b, T3a-T3b. Each of the sets of switches comprises two switches, wherein one of the two switches is connected between a first terminal of the corresponding tertiary winding and a node of the rectifier 41, and the other one of said two switches is connected between a second terminal of the tertiary winding and the node of said rectifier 41. For example, a first set of switches of the rectifier 41 is composed of the switches SR_S1 and SR_S2, and corresponds to the tertiary winding T1a-T1b. The switch SR_S1 is connected between a first terminal of the tertiary winding T1a-T1b and a node of the rectifier 41. The second switch SR_S2 is connected between a second terminal of the tertiary winding T1a-T1b and the node of said rectifier 41. Similarly, a second set of switches of the rectifier 41 is composed of the switches SR_S3 and SR_S4, and corresponds to the tertiary winding T2a-T2b. The switch SR_S3 is connected between a first terminal of the tertiary winding T2a-T2b and the node of the rectifier 41. The switch SR_S4 is connected between a second terminal of the tertiary winding T2a-T2b and the node of said rectifier 41. A third set of switches of the rectifier 41 is composed of the switches SR_S5 and SR_S6, and corresponds to the tertiary winding T3a-T3b. The switch SR_S5 is connected between a first terminal of the tertiary winding T3a-T3b and the node of the rectifier 41. The switch SR_S6 is connected between a second terminal of the tertiary winding T3a-T3b and the node of said rectifier 41. Each of the tertiary windings T1a-T1b, T2aT2b, T3a-T3b has a midpoint, and all the midpoints are connected to a second output terminal of the rectifier 41. A first output terminal of the rectifier 41 is connected to said node of the rectifier 41.

In an embodiment where the switches SR_S1 to SR_S6 of the rectifier 41 are respectively a diode, the cathodes of the diodes are connected to the node of the rectifier 41. These diodes are, for example, so-called "ultra-fast" diodes known in themselves. However, compared to the embodiment with the switches SR_S1 to SR_S6 being MOSFETs, the embodiment with the switches SR_S1 to SR_S6 being diodes would reduce the efficiency of the electrical system 1, especially a voltage conversion efficiency for charging the second battery 44. In addition, according to an embodiment, the switches SR_S1 to SR_S6 of the rectifier 41 can perform a synchronous rectification. In particular, the switches SR_S1 to SR_S6 can be self-controlled, and the conduction loss can thus be reduced.

Alternatively, according to the embodiment illustrated in Figure 4, the tertiary windings T1, T2, T3 are connected to three half-bridges of the rectifier 41. The switches SR_S1 to SR_S6 form plural sets of switches respectively connected to one of the tertiary windings T1, T2, T3. The tertiary winding T1 is connected to a first set of switches composed of the switches SR_S1 and SR_S2. Similarly, the tertiary windings T2 and T3, are respectively connected to a second set of switches composed of the switches SR_S3, SR_S4 and to a third set of switches composed of the switches SR_S5, SR_S6.

The transformer 20 and the rectifier 41 may supply the buck converter 42 in order to eventually charge the second battery 44. The buck converter 42 is a DC-DC converter configured to step down voltage from its input to its output. The buck converter 42 generates an output voltage of between 8 V and 15.5 V (e.g. an output voltage of 12 V) which will be supplied to the second battery 44. The buck converter 42 is preferably a multi-phase interleaved buck converter (e.g. a three-phase interleaved buck converter), and comprises plural switches BUCK_S1 to BUCK_S6 and inductors Lb1 to Lb3. The switches BUCK_S1 to BUCK_S6 are preferably MOSFET transistors, and form plural pairs of switches respectively in series with one of the inductors Lb1, Lb2, Lb3, as illustrated in Figure 1. The inductors Lb1 to Lb3 are connected between the switches BUCK_S1 to BUCK_S6 and the output of the buck converter 42. Preferably, the buck converter 42 further comprises a capacitor Cb at or connected to the input of the buck converter 42.

Preferably, the switches of the LVDC part 40 are 40V and 60V power MOSFETs. According to an embodiment, the LVDC part 40 further comprises an output filter 43. The output filter 43 is connected between the buck converter 42 and the second battery 44. In addition, the LVDC part 40 may comprise at least one secondary inductor configured to filter the current to be supplied to the second battery 44 so as to reduce ripples in the current and to keep only the continuous component of said current. According to an embodiment, the secondary inductor is in the output filter 43 to filter the current which is from the buck converter 42 and is to be supplied to the second battery 44.

A transformation ratio between the primary winding P1 and the first secondary winding S1, and that between the primary winding P2 and the first secondary winding S2, and that between the primary winding P3 and the first secondary winding S3, are respectively of the order of 1, to provide the first battery 34 with a voltage greater than 100 V, in particular of the order of 400 V, from the PFC (such as a public power supply network already converted into DC voltage regulated in the DC Link capacitors). A transformation ratio between the primary winding P1 or the first secondary winding S1 and the tertiary winding T1a-T1b (or T1), and that between the primary winding P2 or the first secondary winding S2 and the tertiary winding T2a-T2b (or T2), and that between the primary winding P3 or the first secondary winding S3 and the tertiary winding T3a-T3b (or T3), are nevertheless determined so as to obtain, in the LVDC part 40, a voltage of less than 100 V, in particular between 24 V and 48 V, or even 12V.

The electrical system 1 according to the invention is configured to implement at least one of following five operating modes, illustrated in Figures 7 to 11.

Therefore, the electrical system 1 is capable of acting as an electrical charger between the PFC and the first battery 34, and as a DC-DC converter between the first battery 34 and the second battery 44, wherein the first battery 34 is configured to have a higher rated voltage than the second battery 44.

Figure 7 illustrates a first operation mode of the electrical system 1, where the electrical system 1 is utilized only as an on-board charger (OBC) configured to charge the first battery 34 from the PFC. The current flows in a direction D1 in Figure 7.

The LLC primary circuit 12 and the HVDC part 30 are respectively controlled by the first and the second multi-phase H-bridges B1, B2. Moreover, the first and the second multi-phase H-bridges B1, B2 are configured to control a first transformer unit formed by coupling the primary windings P1 to P3 respectively with its corresponding first secondary windings S1 to S3. The resonance capacitors Cr1 to Cr3, the first resonant inductors Llkp1 to Llkp3 and the first magnetizing inductors Lm1 to Lm3 form the first resonant circuit.

The switches LLC_S1 to LLC_S6 of the first multi-phase H-bridge B1 are controlled in zero voltage switching (ZVS) operation. Meanwhile, the switches REC_S1 to REC_S6 of the second multi-phase H-bridge B2 are controlled in zero current switching (ZCS) operation. The switches BUCK_S1 to BUCK_S6 of the buck converter 42 are open. In other words, the buck converter 42 is deactivated.

The LLC primary switching frequency is thus modified to regulate the voltage for charging the first battery 34. Although a voltage is generated at the output of the rectifier 41 of the LVDC part 40, there is still no current to the second battery 44 because the buck converter 42 is deactivated.

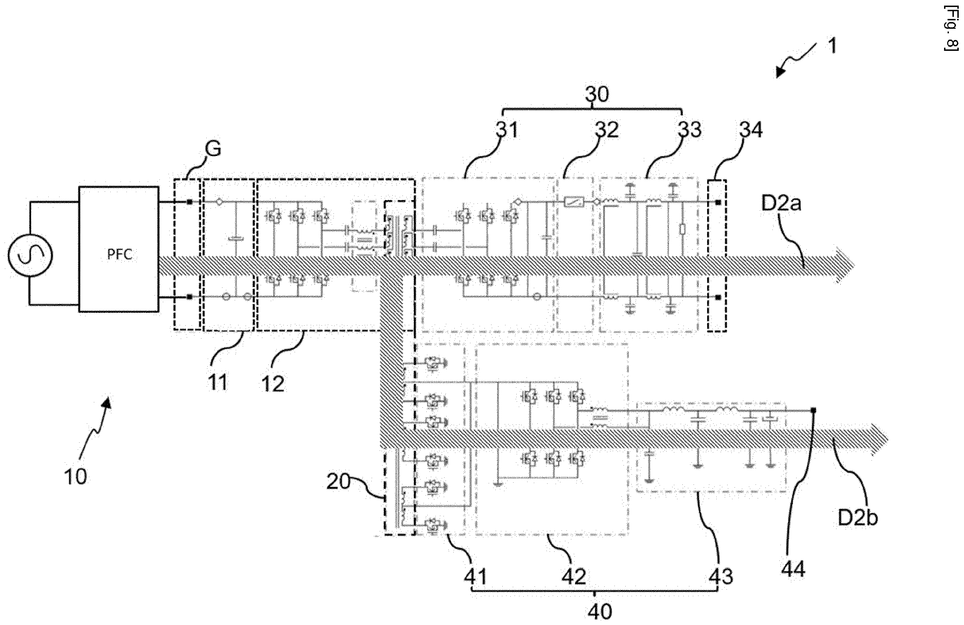

Figure 8 illustrates a second operation mode of the electrical system 1, where the electrical system 1 is utilized as an OBC to charge the first battery 34 and, simultaneously, is utilized as a DC-DC converter to charge the second battery 44. The first and second batteries 34, 44 are both charged from the PFC. The current flows respectively in two directions D2a and D2b in Figure 8.

The tertiary windings of the transformer 20 and the primary windings P1 to P3 form a second transformer unit in order to supply the second battery 44. A transformation ratio between each of the primary windings S1 to S3 and its corresponding tertiary winding is chosen such that, compared to the HVDC part 30, the voltage in the LVDC part 40 is reduced. Moreover, as mentioned above, the at least one secondary inductor of LVDC part 40 filters the current to be supplied to the second battery 44 so as to reduce ripples in the current.

The first and second multi-phase H-bridges B1, B2 are controlled in the same way as in the first operation mode for charging the first battery 34, which allows the electrical system 1 to function as an OBC serving as a main power supply which charges the first battery 34. Meanwhile, the rectifier 41 is controlled in a different way from the first operation mode so that the LVDC part 40 functions as an auxiliary power to charge the second battery 44. For this purpose, the switches SR_S1 to SR_S6 of the rectifier 41 are controlled to perform synchronous rectification. The buck converter 42, connected to the output of the rectifier 41, reduces the voltage level to a desired voltage level for charging the second battery 44.

The switches LLC_S1 to LLC_S6 of the first multi-phase H-bridge B1 are controlled in ZVS operation. Meanwhile, the switches REC_S1 to REC_S6 of the second multi-phase H-bridge B2 are controlled in ZCS operation. The switches SR_S1 to SR_S6 of the rectifier 41 performs, as mentioned above, a synchronous rectification and, if necessary, hard-switching is performed to force the switches BUCK_S1 to BUCK_S6 of the buck converter 42 to be respectively switched on or off.

The LLC primary switching frequency is thus modified to regulate the voltage for charging the first battery 34. A voltage of between 16 V and 28 V is generated at the output of the rectifier 41 of the LVDC part 40, and the buck converter 42 is then activated to regulate the LVDC voltage to be between 8V and 15.5V. Due to the current limitation in the AC side, the total power is limited at 7 kW so that the total power is shared between the first battery 34 and the second battery 44.

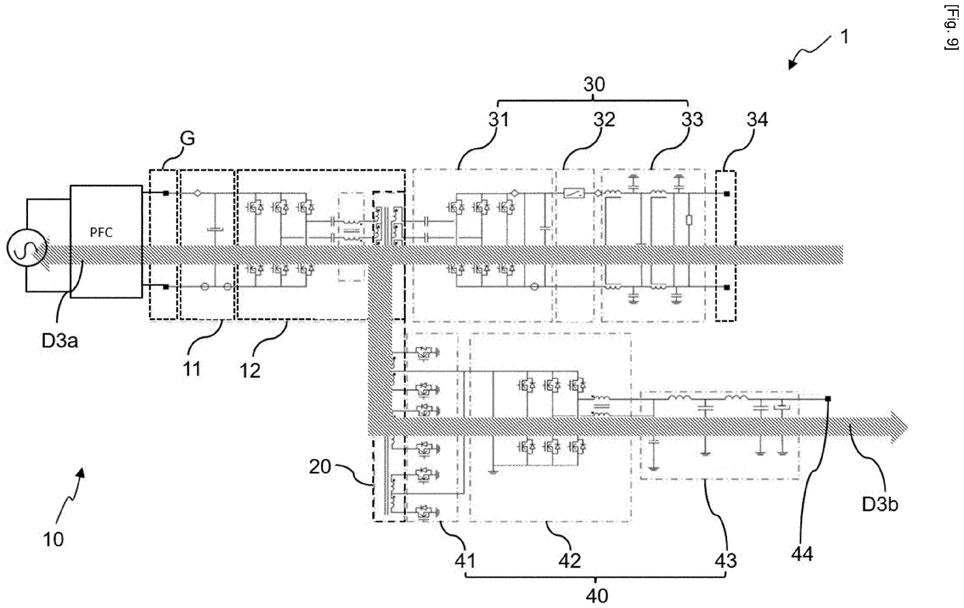

Figure 9 illustrates a third operation mode of the electrical system 1. The third operation mode is partially similar to the second operation mode since the LLC primary circuit 12 and the LLC secondary circuit 31 are designed to be symmetric.

In the third operation mode, the electrical system 1 is utilized as to discharge the first battery 34 to simultaneously charge the PFC and the second battery 44. In other words, the electrical power from the first battery 34 is shared between the PFC and the second battery 44. The current flows respectively in two directions D3a and D3b in Figure 9.

The switches LLC_S1 to LLC_S6 of the first multi-phase H-bridge B1 are controlled in ZCS operation. Meanwhile, the switches REC_S1 to REC_S6 of the second multi-phase H-bridge B2 are controlled in ZVS operation. The switches BUCK_S1 to BUCK_S6 of the buck converter 42 are open. In other words, the buck converter 42 is deactivated. The rectifier 41 allows the LVDC part 40 to function as an auxiliary power supply to charge the second battery 44. For this purpose, the switches SR_S1 to SR_S6 of the rectifier 41 are controlled to perform synchronous rectification. If necessary, hard-switching is performed to force the switches BUCK_S1 to BUCK_S6 of the buck converter 42 to be respectively switched on or off.

Similar to the second operation mode, the LVDC part 40 in the third operation mode preferably comprises the at least one secondary inductor configured to filter the current to be supplied to the second battery 44 so as to reduce ripples in the current and to keep only the continuous component of said current.

The LLC primary switching frequency is thus modified to regulate the voltage at the PFC part 10. A voltage of between 16 V and 28 V is generated at the output of the rectifier 41 of the LVDC part 40, and the buck converter 42 is then activated to regulate the LVDC voltage to be between 8V and 15.5V.

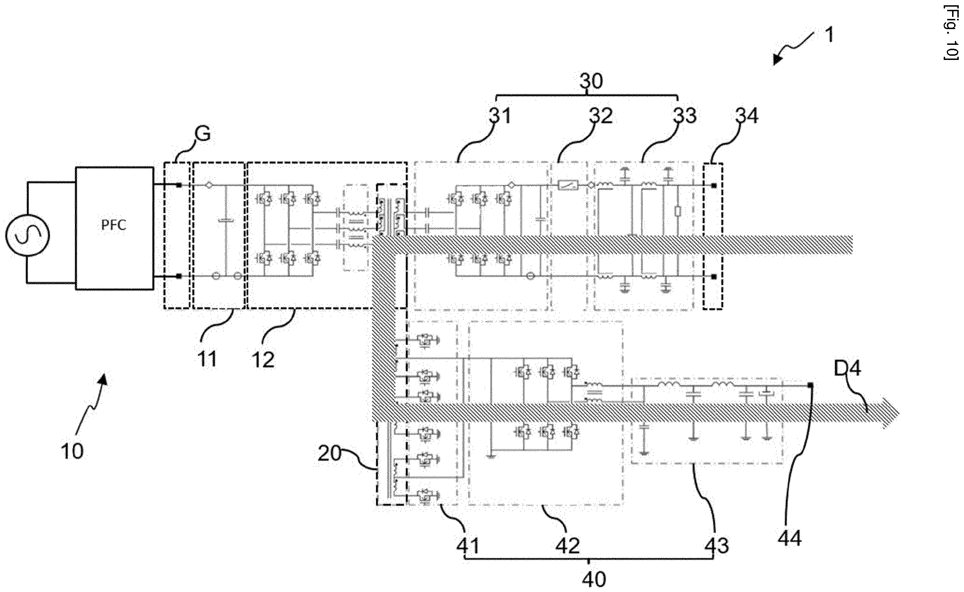

Figure 10 illustrates a fourth operation mode of the electrical system 1, where the electrical system 1 is utilized only as a DC-DC converter configured to discharge the first battery 34 to autonomously charge the second battery 44. This function is also known as auxiliary power supply (APM). The current flows in a direction D4 in Figure 10.

There is no current in the PFC.

The first multi-phase H-bridge B1 is deactivated. The second multi-phase H-bridge B2 is controlled with a duty cycle, e.g. 50%, so as to supply the LVDC part 40 with an adequate voltage to charge the second battery 44. The first secondary windings S1 to S3 and the tertiary windings of the transformer 20 form a third transformer unit. In particular, the buck converter 42 is utilized to convert a voltage which is obtained at the output of the rectifier 41 and which depends on a transformation ratio between the tertiary windings of the transformer 20 and the first secondary windings S1 to S3, into a desired voltage to be supplied to the second battery 44.

Moreover, the LVDC part 40 preferably comprises the at least one secondary inductor configured to filter the current to be supplied to the second battery 44 so as to reduce ripples in the current and to keep only the continuous component of said current.

The switches LLC_S1 to LLC_S6 of the first multi-phase H-bridge B1 are not active. Meanwhile, hard-switching is performed to force the switches REC_S1 to REC_S6 of the second multi-phase H-bridge B2 to be respectively switched on or off. The switches SR_S1 to SR_S6 of the rectifier 41 are controlled to perform synchronous rectification and, if necessary, hard-switching is performed to force the switches BUCK_S1 to BUCK_S6 of the buck converter 42 to be respectively switched on or off.

The LLC secondary switching frequency is modified to regulate the voltage at the LVDC part 40, and the buck converter 42 is then activated to regulate the LVDC voltage to be between 8V and 15.5V.

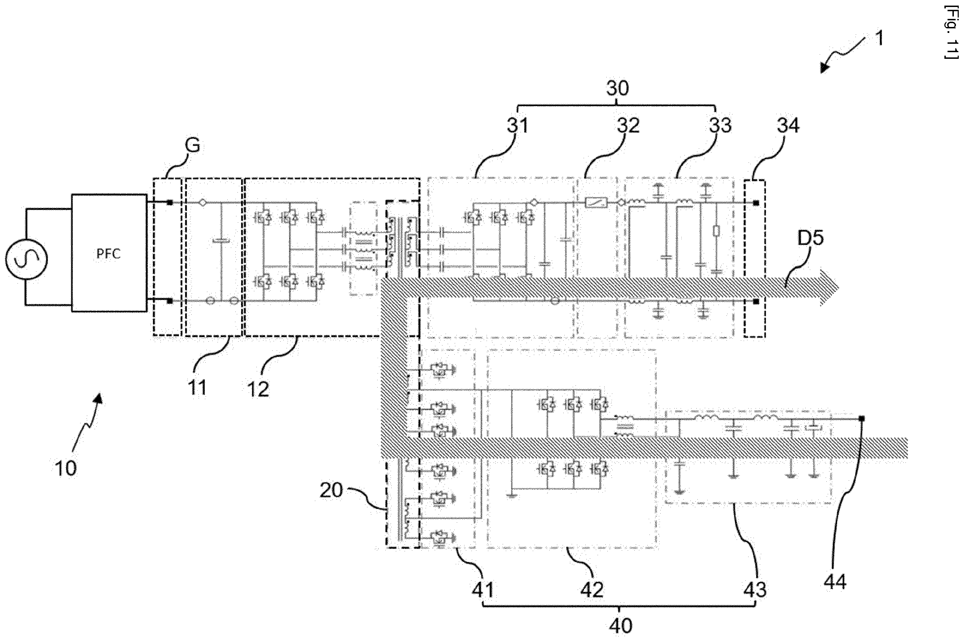

Figure 11 illustrates a fifth operation mode of the electrical system 1, where the electrical system 1 is utilized as a reverse DC-DC converter configured to discharge the second battery 44 to autonomously charge the first battery 34. The current flows in a direction D5 in Figure 11.

The DC-Link capacitor 11 of the PFC part 10 has to be disconnected to avoid current oscillations inside electrolytic capacitors as well as to prevent lifetime reduction. The buck converter 42 becomes an interleaved boost and supplies power to the LV side of the transformer 20. Said power is then transferred to the LLC secondary circuit 31, which allows to charge or precharge the HV capacitors of the HVDC part 30 and then to charge the first battery 34. A soft-start is required at the LV side to limit the LV current.

In addition, according to embodiments different from the above-mentioned ones, the inductors Lb1 to Lb3 of the buck converter 42 can be coupled to one another or, alternatively, are not coupled to one another. Moreover, although in the previous embodiments the buck converter 42 is a three-phase interleaved buck converter at the LV side of the transformer, the buck converter 42 can have a number of phases different from three and/or can be moved to the HVDC part 30 of the electrical system 1.

The invention also concerns the transformer 20 and the wiring of the windings of the transformer 20 wound on the magnetic core 5, as mentioned above. Figure 12 illustrates the magnetic core 5 according to an embodiment of the invention. The magnetic 5 comprises plural limbs. According to the embodiments illustrated in the figures, the magnetic core 5 has three limbs 51, 52, 53. In another (not illustrated in the figures), the magnetic core 5 can have a number of limbs different from three.

The magnetic core 5 is preferably formed by combining a first half core 5a and a second half core 5b. The first half core 5a and the second half core 5b are preferably both in the form E. The first half core 5a comprises first sub-limbs 51a, 52a, 53a. The second half core 5b comprises second sub-limbs 51b, 52b, 53b. Advantageously, each of the limbs 51, 52, 53 is composed of one of the first sub-limbs (51a, 52a or 53a) and one of the second sub-limbs (51b, 52b or 53b). Each of the limbs 51 to 53 comprises an air gap 61 located between its first sub-limb and the corresponding second sub-limb, as shown in Figure 12. The air gap 61 allows to improve energy management by flattening the hysteresis curve and reducing the permeability of the magnetic core 5, and also makes it possible to adjust the value of the magnetizing inductors.

Taking one air gap 61 as an example, it can be located in the middle of the limb of the magnetic core 5, wherein a length of the first sub-limb is equal to that of the corresponding second sub-limb. Alternatively and preferably, the air gap 61 is located either close to the first half core 5a, or close to the second half core 5b, which facilitates the wiring of the windings of the transformer 20. If the air gap 61 is located closer to the first half core 5a, or even very close to a bottom of the first sub-limb, the first sub-limb presents a length smaller (or much smaller) than that of the corresponding second sub-limb. Alternatively, if the air gap 61 is located closer to the second half core 5b, or even very close to a bottom of the second sub-limb, the first sub-limb presents a length greater (or much greater) than that of the corresponding second sub-limb.

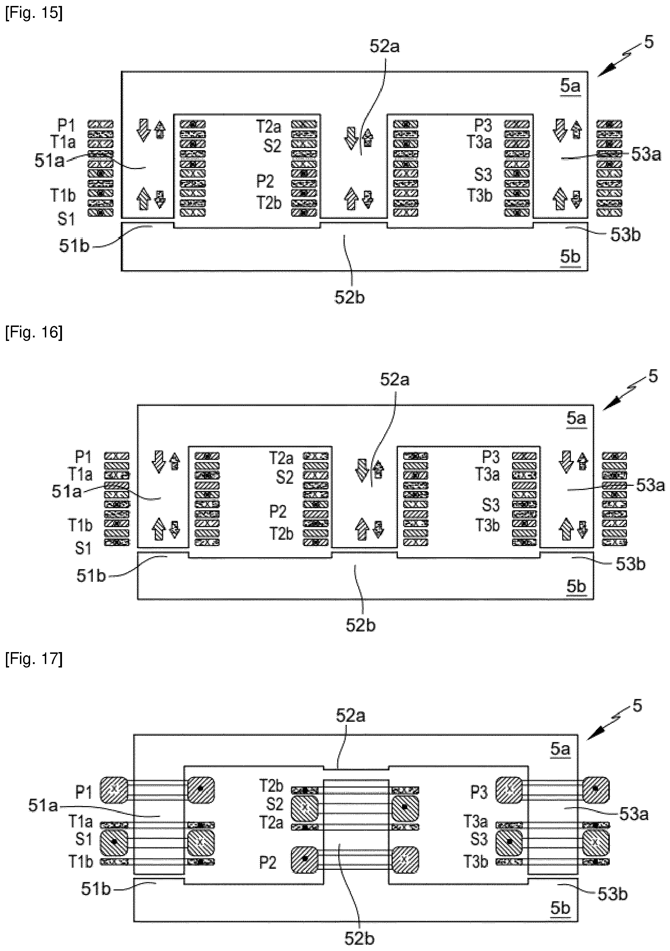

For example, as illustrated in Figures 12, 13, 15, 16, the air gaps 61 are all located close to the second half core 5b, or advantageously, are respectively very close to the bottom of the second sub-limb 51b, 52b, 53b. The first sub-limbs 51a, 52a, 53a present each a length much greater than that of the corresponding second sub-limb 51b, 52b, 53b. On the other hand, according to other examples illustrated in Figures 14 and 17, the air gap 61 in the middle limb 52 is located close to the first half core 5a (or advantageously, is very close to the bottom of the first sub-limb 52a) while the air gaps 61 in the limbs (51 or 53) adjacent to the middle limb 52 are located close to the second half core 5b. Alternatively, the air gaps 61 are all located close to the first half core 5a, or advantageously, are respectively very close to the bottom of the first sub-limb 51a, 52a, 53a. Alternatively, the air gap 61 in the middle limb 52 is located close to the second half core 5b (or advantageously, is very close to the bottom of the second sub-limb 52b) while the air gaps 61 in the limbs (51 or 53) adjacent to the middle limb 52 are located close to the second half core 5b.

Figures 13 to 17 illustrate respectively one of five wiring options for wiring on the magnetic core 5 the windings of the transformer 20. In each of the five wiring options, one of the primary windings P1 to P3, one of the first secondary windings S1 to S3, and one of the tertiary windings (T1a-T1b, T2a-T2b, T3a-T3b, or T1 to T3) are wound around one of the limbs 51 to 53 of the magnetic core 5.

Symbols "x" and "•" in Figures 13 to 17 indicate two opposite wiring directions. More precisely, the symbol "x" indicates that a wire of one of the windings of the transformer 20 enters towards the magnetic core 5, for example according to a first direction 71 from the front side 55 to the back side of the magnetic core 5. The symbol "•" indicates a wire of one of the windings of the transformer 20 leaves the magnetic core 5, for example according to a second direction opposite to the first direction 71 and from the back side to the front side 55 of the magnetic core 5.

Figure 13 illustrates a first wiring option according to the invention.

Preferably, the primary windings P1, P2, P3 and the first secondary windings S1, S2, S3 are Litz wires. A Litz wire is an electrical conductor made of twisted single wires. The Litz wires of the primary windings P1, P2, P3 and the first secondary windings S1, S2, S3 are made of series connections between multiples turns. Moreover, for each of the limbs of the magnetic core 5, the corresponding first secondary winding (P1, P2 or P3) is sandwiched between two sets of turns of the tertiary winding of the transformer 20. For example, the first secondary winding S1 is sandwiched between two sets of turns T1a, T1b of the tertiary winding T1a-T1b, wherein the two sets of turns T1a, T1b are the two auxiliary windings T1a, T1b of the tertiary winding T1a-T1b.

The tertiary windings of the transformer 20 are preferably flat conductors. Advantageously, in order to split a high-current required by the tertiary windings, each of said tertiary windings comprises flat conductors in parallel. In other words, the tertiary windings are respectively arranged by comprising parallel-connected turns.

The air gaps 61 are respectively located close to the second half core 5b, or more precisely, close to the bottom of one of the second sub-limbs 51b, 52b, 53b. Advantageously, the windings respectively wound around one of the limbs 51, 52, 53, are respectively wound around one of the first sub-limbs 51a, 52a, 53a. In other words, no winding is wound around the second sub-limbs 51b, 52b, 53b, as illustrated in Figure 13. The air gaps 61 reduce or avoid an undesirable interference caused by a leakage inductance between the primary windings P1 to P3 and the first secondary windings S1 to S3. In addition, a basic insulation is required between the respective conductors of the primary windings P1 to P3, the first secondary windings S1 to S3 and the tertiary windings T1a-T1b, T2a-T2b, T3a-T3b which interface one another, which makes it easier to implement in the electrical vehicle applications.

Figure 14 illustrates a second wiring option according to the invention. The second wiring option allows to keep the symmetry between the windings respectively wound around one of the limbs 51 to 53 of the magnetic core 5.

The only difference between the second wiring option and the previously described first option is the position of the air gap 61 in the middle limb 52. The rest of the features of the second wiring option are identical or similar to those of the first wiring option, and are thus not redundantly described herein.

According to the second wiring option, the air gap 61 in the middle limb 52 is located close to the first half core 5a (or more precisely, close to the bottom of the first half-limb 52a) while the other air gaps 61 are located close to the second half core 5b (or more precisely, close to the bottoms of the second half-limbs 51b, 53b). Advantageously, the windings wound around the middle limb 52 are actually wound around the second sub-limb 52a while the windings respectively wound around one of the limbs 51, 53 are actually respectively wound around one of the first sub-limbs 51a, 53a, as illustrated in Figure 14.

Figure 15 illustrates a third wiring option according to the invention. The third wiring option is identical or similar to the first wiring option in terms of the positions of the air gaps 61.

Each of the tertiary windings (i.e. the low voltage sides) of the transformer 20 is interleaved with one of the primary windings P1, P2, P3, in a way that one set of turns of the tertiary winding is sandwiched between two sets of turns of the corresponding primary winding. For example, the tertiary winding T1a-T1b is interleaved with the corresponding primary winding P1 in a way that one set of turns (of the auxiliary winding T1a) of the tertiary winding T1a-T1b is sandwiched between two sets of turns of the primary winding P1. The tertiary winding T2a-T2b is interleaved with the corresponding primary winding P2 in a way that one set of turns (of the auxiliary winding T2b) of the tertiary winding T2a-T2b is sandwiched between two sets of turns of the primary winding P2, as illustrated in Figure 15.

In addition, each of the tertiary windings of the transformer 20 is also respectively interleaved with one of the first secondary windings S1, S2, S3, in a way that one set of turns of the tertiary winding is sandwiched between two sets of turns of the corresponding first secondary winding. For example, the tertiary winding T1a-T1b is interleaved with the corresponding first secondary winding S1 in a way that one set of turns (of the auxiliary winding T1b) of the tertiary winding T1a-T1b is sandwiched between two sets of turns of the first secondary winding S1. The tertiary winding T2a-T2b is interleaved with the corresponding first secondary winding S2 in a way that one set of turns (of the auxiliary winding T2a) of the tertiary winding T2a-T2b is sandwiched between two sets of turns of the first secondary winding S2, as illustrated in Figure 15.

Furthermore, each of the primary windings of the transformer 20 is respectively interleaved with one of the tertiary winding or each of the secondary windings of the transformer is respectively interleaved with one of the tertiary winding. The primary windings and the secondary windings are not interleaved. This ensures the management of the leakage inductance between the primary windings and the secondary windings. Thus, the resonant inductors can be integrated into the transformer 20, as shown in Figure 2 and in Figure 5.

The above-mentioned interleaving configuration provided in the third wiring option allows to reduce power losses.

Moreover, in the first, the second, the third wiring options described above and the fifth wiring option which will be described, the primary windings respectively wound around one of two adjacent limbs are arranged in a way that one of the primary windings is wound close to one of the first and the second half cores 5a, 5b while the other primary winding is wound close to the other one of the first and the second half cores 5a, 5b. For example, the primary winding P1 (or P3) is wound close to the first half core 5a while the primary winding P2 is wound close to the second half core 5b.

Similarly, according to an embodiment, the first secondary windings respectively wound around one of two adjacent limbs are arranged in a way that one of the first secondary windings is wound close to one of the first and the second half cores 5a, 5b while the other first secondary winding is wound close to the other one of the first and the second half cores 5a, 5b. For example, the first secondary winding S1 (or S3) is wound close to the second half core 5b while the first secondary winding S2 is wound close to the first half core 5a.

Figure 16 illustrates a fourth wiring option according to the invention. The fourth wiring option is identical or similar to the third and the first wiring options in terms of the positions of the air gaps 61.

Each of the tertiary windings of the transformer 20 is interleaved with one of the primary windings P1, P2, P3, in a way that at least one set of turns of the tertiary winding and one set of turns of the corresponding first secondary winding are sandwiched between two sets of turns of the corresponding primary winding. For example, the tertiary winding T1a-T1b is interleaved with the corresponding primary winding P1 in a way that one set of turns (of the auxiliary winding T1a) of the tertiary winding T1a-T1b and one set of the corresponding first secondary winding S1 are sandwiched between two sets of turns of the primary winding P1. The tertiary winding T2a-T2b is interleaved with the corresponding primary winding P2 in a way that one set of turns (of the auxiliary winding T2b) of the tertiary winding T2a-T2b and one set of turns of the corresponding first secondary winding S2 are sandwiched between two sets of turns of the primary winding P2, as illustrated in Figure 16.

In addition, each of the tertiary windings of the transformer 20 is also interleaved with one of the first secondary windings S1, S2, S3, in a way that at least one set of turns of the tertiary winding and one set of turns of the corresponding primary winding are sandwiched between two sets of turns of the corresponding first secondary winding. For example, the tertiary winding T1aT1b is interleaved with the corresponding first secondary winding S1 in a way that one set of turns (of the auxiliary winding T1b) of the tertiary winding T1a-T1b and one set of the corresponding primary winding P1 are sandwiched between two sets of turns of the first secondary winding S1. The tertiary winding T2a-T2b is interleaved with the corresponding first secondary winding S2 in a way that one set of turns (of the auxiliary winding T2a) of the tertiary winding T2a-T2b and one set of turns of the corresponding primary winding P2 are sandwiched between two sets of turns of the first secondary winding S2, as illustrated in Figure 16.

The above-mentioned interleaving configuration provided in the fourth wiring option allows, on one hand, to perform a basic insulation required between the respective conductors of the first secondary windings S1 to S3 and the tertiary windings which interface one another, and on the other hand, to perform a reinforced insulation required between the respective conductors of the primary windings P1 to P3 and the tertiary windings which interface one another. In this way, power losses and leakage inductance are reduced. Therefore, the fourth wiring option is suitable to be applied to the embodiments illustrated in Figures 3 and 6 where the first resonant inductors Llkp1 to Llkp3, the first magnetizing inductors Lm1 to Lm3, the second resonant inductors Llks1 to Llks3 (and possibly the second magnetizing inductors) are all placed outside the transformer 20. However, the magnetizing inductors can be placed inside the transformer 20, provided that the length of the air gap is regulated.

The magnetizing inductors Lm1 to LM3 are not included to the transformer 20, when the air gap 61 is zero.

Figure 17 illustrates a fifth wiring option according to the invention.

The only difference between the present fifth wiring option and the previously described second wiring option is whether the tertiary windings are respectively composed of two auxiliary windings (as illustrated in Figures 1 and 14), or are respectively a single winding (as illustrated in Figures 4 and 17). The rest of the features of the fifth wiring option are identical or similar to those of the second wiring option, and are thus not redundantly described herein.

For each of the limbs of the magnetic core 5, the corresponding first secondary winding (P1, P2 or P3) is sandwiched between two sets of turns of the tertiary winding of the transformer 20. For example, the first secondary winding S1 is sandwiched between two sets of turns of the tertiary winding T1. Similarly, the first secondary winding S2 is sandwiched between two sets of turns of the tertiary winding T2.

Similarly, the first, third and fourth wiring options, as illustrated in Figures 13, 15 and 16, can be applied to the transformer 20 with the tertiary windings being respectively a single winding.

The electrical system 1 and the above-mentioned transformer design according to the invention, concern an integrated OBC/DC-DC converter for EV or HEV using only one multi-phase transformer, and provide the above-mentioned wiring options and the five operation modes without requiring an additional voltage converter. Compared to a conventional electrical system which comprises an independent OBC and an independent DC-DC converter, the electrical system 1 has less components, which allows the electrical system 1 has a smaller volume and a lighter weight. In addition, the manufacturing and assembly cost is reduced. The invention is scalable for different power levels 7kW, 11kW and 22kW for example, and for different voltage networks 800V, 24V, 48V for instance.

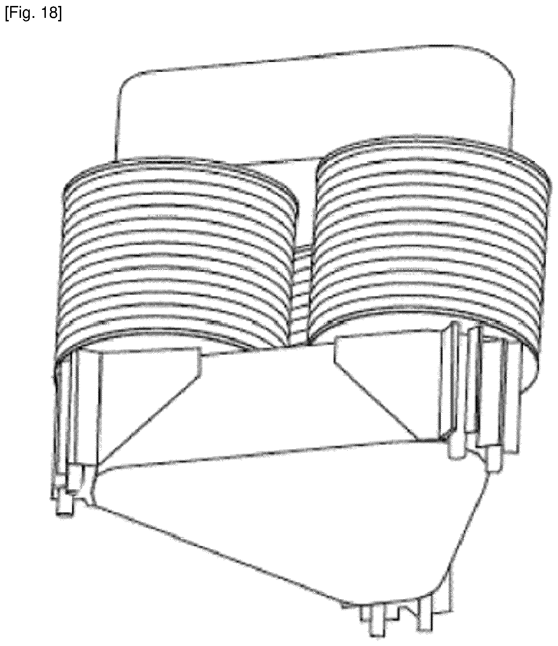

According to a variant of the invention, Figure 18 illustrates the electrical system a triangular transformer 20b. In this variant, only the shape of the transformer changes, all its operation remains the same as previous.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A transformer (20) comprising a magnetic core (5), the magnetic core (5) comprising plural limbs (51, 52, 53) around each of which is wound a primary winding (P1, P2, P3), a first secondary winding (S1, S2, S3) and a tertiary winding (T1a-T1b, T2aT2b, T3a-T3b or T1, T2, T3); the transformer (20) comprising said windings; the magnetic core (5) comprising a first half core (5a) and a second half core (5b) respectively comprising sub-limbs (51a, 52a, 53a, 51b, 52b, 53b) of the limbs (51, 52, 53); the transformer (20) being **characterized in that**:
- the air gaps (61) are respectively located either close to the first half core (5a), or close to the second half core (5b);
- some of the windings of the transformer (20) are Litz wires, and some of the windings are flat conductors.

2. The transformer (20) according to claim 1, wherein:
- the primary windings (P1, P2, P3) and the first secondary windings (S1, S2, S3) are Litz wires; and/or
- the tertiary windings of the transformer (20) are flat conductors.

3. The transformer (20) according to the preceding claim, wherein:
- the Litz wires of the primary windings (P1, P2, P3) and the first secondary windings (S1, S2, S3) are made of series connections between multiples turns; and/or
- the tertiary windings of the transformer (20) are respectively arranged by comprising parallel-connected turns.

4. The transformer (20) according to any one of the preceding claims, wherein:
- the air gaps (61) are all located close to the first half core (5a); or
- the air gaps (61) are all located close to the second half core (5b); or
- the air gap (61) in the middle limb (52) is located close to the first half core (5a) while the air gap (61) in the limb (51 or 53) adjacent to the middle limb (52) is located close to the second half core (5b); or
- the air gap (61) in the middle limb (52) is located close to the second half core (5b) while the air gap (61) in the limb (51 or 53) adjacent to the middle limb (52) is located close to the first half core (5a).

5. The transformer (20) according to any one of the preceding claims, wherein for each of the limbs of the magnetic core (5), the corresponding first secondary winding is sandwiched between two sets of turns of the tertiary winding.

6. The transformer (20) according to any one of preceding claims 1 to 5, wherein:
- each of the tertiary windings of the transformer (20) is interleaved with one of the primary windings, in a way that one set of turns of the tertiary winding is sandwiched between two sets of turns of the corresponding primary winding; and/or
- each of the tertiary windings is also respectively interleaved with one of the first secondary windings, in a way that one set of turns of the tertiary winding is sandwiched between two sets of turns of the corresponding first secondary winding.

7. The transformer (20) according to any one of the preceding claims, wherein:
- the primary windings respectively wound around one of two adjacent limbs are arranged in a way that one of the primary windings is wound close to one of the first and the second half cores while the other primary winding (P1, P3) is wound close to the other one of the first and the second half cores; and/or
- the first secondary windings respectively wound around one of two adjacent limbs are arranged in a way that one of the first secondary windings is wound close to one of the first and the second half cores while the other first secondary winding is wound close to the other one of the first and the second half cores.

8. The transformer (20) according to any one of preceding claims 1 to 6, wherein:
- each of the tertiary windings of the transformer (20) is interleaved with one of the primary windings, in a way that at least one set of turns of the tertiary winding and one set of turns of the corresponding first secondary winding are sandwiched between two sets of turns of the corresponding primary winding; and/or
- each of the tertiary windings is also interleaved with one of the first secondary windings, in a way that at least one set of turns of the tertiary winding and one set of turns of the corresponding primary winding are sandwiched between two sets of turns of the corresponding first secondary winding.

9. The transformer (20) according to any one of the preceding claims, wherein the tertiary windings (T1a-T1b, T2a-T2b, T3a-T3b or T1, T2, T3) are respectively composed of two auxiliary windings (T1a, T1b; T2a, T2b; T3a, T3b), or are respectively a single winding (T1, T2, T3).

10. The transformer of any preceding claim, the primary windings (P1, P2, P3) and the secondary windings (S1, S2, S3) being coupled in a way to form a first sub-transformer, the primary windings (P1, P2, P3) and tertiary windings (T1a-T1b, T2aT2b, T3a-T3b or T1, T2, T3) being coupled in a way to form a second sub-transformer, the secondary windings (S1, S2, S3) and tertiary windings (T1a-T1b, T2a-T2b, T3a-T3b or T1, T2, T3) being coupled in a way to form a third sub-transformer;

11. An electrical system (1) for an electric vehicle or a hybrid electric vehicle, comprising a transformer (20) according to any one of the preceding claims.

12. The electrical system (1) according to the preceding claim, being connected to a power factor correction (PFC) converter and configured to charge and discharge a first battery (34) and a second battery (44) of the vehicle; the first battery (34) having a higher rated voltage than the second battery (44); the electrical system (1) comprising:
- a LLC primary circuit (12) comprising a first multi-phase H-bridge (B1) to control primary windings (P1, P2, P3) of the transformer (20); the LLC primary circuit (12) being connected to the PFC converter;
- a HVDC part (30) coupled to the LLC primary circuit (12), first secondary windings (S1, S2, S3) of the transformer (20) and the first battery (34), so as to allow energy exchange with the first battery (34); the HVDC part (30) comprising a second multi-phase H-bridge (B2) configured to control the first secondary windings (S1, S2, S3);
- a LVDC part (40) coupled to tertiary windings of the transformer (20) and to the second battery (44) so as to allow energy exchange with the second battery (44); the LVDC part (40) comprising a rectifier (41) configured to control the tertiary windings of the transformer (20).

13. An electric vehicle or a hybrid electric vehicle comprising an electrical system (1) according to claim 11 or claim 12.
